# EUROPEAN PATENT APPLICATION

(11) **EP 4 610 538 A1**
(43) Date of publication of application: **03.09.2025**
(21) Application number: 24172108.3
(22) Date of filing: 24.04.2024
(51) Int. Cl.: F16M 13/02, F16B 2/12, F16B 7/04, F16M 11/28, G08B 13/196

(54) **CAMERA STAND SYSTEM FOR A BABY CAMERA**

(30) Priority: 27.02.2024 WO PCT/CN2024/078722
(71) Applicant: Koninklijke Philips N.V., 5656 AG Eindhoven (NL)
(72) Inventor: REEKERS, Ruben Arnold Herman, 5656 AG Eindhoven (NL); LUI, Kwan Fai, 5656 AG Eindhoven (NL); XU, Changguan, 5656 AG Eindhoven (NL)
(74) Representative: Philips Intellectual Property & Standards

(57) **Abstract**

The invention provides a camera stand system for a baby camera (1). The camera stand system comprises, a supporting unit (2) for supporting the baby camera (1), a clamping structure (3), the clamping structure (3) is adapted to clamping on an object (6), the clamping structure (3) includes a first clamping part (4), a second clamping part (5), and a clamping force generator, the first clamping part (4) and the second clamping part (5) define a receiving space (6a) configured to receive at least a part of the object (6), the clamping force generator is in connection with the first clamping part (4) and the second clamping part (5) and generates a clamping force for clamping on the object (6), the supporting unit (2) is configured to secure on the second clamping part (5), the second clamping part (5) is removable from the clamping structure (3) and configured to be mountable to a wall.

## Description

### FIELD OF THE INVENTION

The invention relates to a camera stand system for a baby camera comprises, a supporting unit for supporting the baby camera, a clamping structure, the clamping structure is adapted to clamping on an object, the clamping structure includes a first clamping part, and a second clamping part.

### BACKGROUND OF THE INVENTION

The camera stand system for clamping on an object or wall mounting as described in the section "field of the invention" is generally known. Caretakers commonly make use of a (video) baby camera to keep track of their baby when they are not in their immediate environment, especially when their baby is sleeping. In recent years, these baby cameras have become more intelligent, with algorithms that use video and audio information to make certain conclusions about the baby's well-being. For example, information about the baby's movement, breathing, or crying can be extracted and this can be translated into information about the baby's sleep state or why a baby is crying.

To have better control over the distance and angle between the baby and the camera, a mounting solution may be provided, which attaches the camera to the baby crib at a relatively fixed position or in the form of a floor stand. Especially for babies <6 months, the position is important.

But, a baby crib clamping solution is only suitable for younger babies (e.g. < 9 months), because the older baby will be able to grab the bracket or camera, which may lead to undesirable consequences. Thus, a wall mounting stand is a preferred configuration for the older baby.

For the current camera stand system for a baby monitor in the market, the crib clamping stand and the wall mounting stand usually come with the new baby monitor as separate two stands. Thus, when baby grows old enough, the caregiver may need to make extra effort to find or order a new separate wall mounting stand to secure the baby camera on the wall.

The baby camera and the camera stand system are usually designed with a convex external shape, so the camera and the stand system can avoid sharp edges, and turning. It can avoid potentially hurting to the baby. It also brings better emotional feelings to fit into the home environment for the baby. Thus, most baby cameras and camera stand systems in the market tend to have a smooth convex external surface.

However, this kind of convex external shape is not suitable for wall mounting, as it can not provide sufficient supporting points on a wall for secure wall mounting.

A camera stand system as described in the section "field of the invention" for baby crib mounting with a floor stand is disclosed by US10708550B2. This known camera stand system is configured to hold the camera in a fixed location and orientation above a crib, so that the image sensor captures an image of the crib and an intervention region adjacent to the crib from a fixed perspective. It also provided a separate screw-in bracket for the wall mounting of the camera head.

A camera stand system as described in the section "field of the invention" for a camera mounting apparatus typically would be used in an overhead position to gain a downward perspective on a sporting event is disclosed by US8152389B1. The mount includes an inverted "U" shaped flexible member including first and second fingers that are parallel to one another, a connecting member joins the first and second fingers at one end, the first and second finger free ends have a stiffness of about ten to thirty pounds per inch. Also the mount includes a camera mount interface extending from the connecting member opposite of the first and second fingers. Wherein the first and second fingers and the connecting member have a slip compressive fit over the beam to hold the mount in place, giving the camera an overhead view.

A camera stand system as described in the section "field of the invention" for a mounting bracket for surveillance cameras is disclosed by US9075290B1. It disclosed a universal L shaped brackets, supports, apparatus, systems and methods for mounting surveillance cameras that form enclosure systems, mounting systems, and pedestal system for the cameras to be mounted on structures, such as but not limited to under a ceiling, a shelf, a wall, inside a pedestal and the like. Another embodiment covers brackets, supports, apparatus, systems and methods for mounting surveillance cameras with a universal mount for inside of vehicles, such as automobiles, and the like. The mounts can include mounting cameras on the backs of seats or door edges. The mounts can mount the cameras inside of pedestals.

A disadvantage of the known camera stand system as described here before is they fail to provide a camera stand system suitable to be mounted on the baby crib, and to ensure good camera position when the baby is younger and the camera position is most sensitive. As the baby grows older and may be able to reach the camera.

### SUMMARY OF THE INVENTION

It is an object of the present invention to provide a camera stand system as described in the section "field of the invention" to increase safety and convenience of use when the baby grows older.

According to a first aspect of the invention, to achieve the above-mentioned object, a camera clamping system having the features as mentioned in the section "field of invention" here before is characterized in that, the camera stand system, wherein, the clamping structure further includes a clamping force generator, the first clamping part and the second clamping part define a receiving space configured to receive at least a part of the object, the clamping force generator is in connection with the first clamping part and the second clamping part and generates a clamping force for clamping on the object, the supporting unit is configured to secure on the second clamping part, the second clamping part is removable from the clamping structure and configured to be mountable to a wall. The invention provides the user with a camera stand system suitable for baby use, and can be converted into a wall mounting configuration without the need for an additional wall-mounting bracket or component.

In a preferred embodiment of the camera stand system according to the invention. The clamping force generator is in connection with the first clamping part and the second clamping part and generates a clamping force to adjust the receiving space to fit to the object and clamping on the object. The camera stand system needs to generate a suitable clamping force to generate sufficient friction force to secure the camera stand system on an object, such as a crib.

In a preferred embodiment of the camera stand system according to the invention. The first clamping part and the second clamping part are relatively movable along a first direction. As the size of the crib and different parts of the crib vary, the moveable configuration allows the clamping structure to adjust the receiving space to fit with the crib.

In a preferred embodiment of the camera stand system according to the invention. The clamping force generator is configured to generate the clamping force substantially in parallel with the first direction. So that. The proper clamping force can be adjusted along with the receiving space.

In a preferred embodiment of the camera stand system according to the invention. The first clamping part having a first clamping surface, and the second clamping part having a second clamping surface, the first clamping surface and the second clamping surface define the receiving space configured to receive at least a part of the object, when the second clamping part is removed from the clamping structure, the second clamping surface is exposed to external and configured to be mountable to the wall. The clamping surface in the clamping structure is also suitable for attaching to a wall. But, the clamping surface usually requires the surface on the internal of the clamping structure. And, it is difficult to attach an internal surface to an external object unless the internal surface is exposed. Thus, the clamping structure is configured with a removable second clamping part, to expose the second clamping surface to external for attaching to a wall. This allows easy conversion from a crib clamping configuration to a wall mounting configuration without additional components.

In a preferred embodiment of the camera stand system according to the invention. The supporting unit includes a first extension and a mounting structure for mounting the baby camera, the first extension having a lower end and an upper end, the mounting structure is secured on the second clamping part through the first extension.

In a preferred embodiment of the camera stand system according to the invention. It further comprises, a connector attached on the lower end of the first extension, a locking mechanism configured in the clamping structure to vertically lock the connector so that the clamp structure can be coupled to the first extension through the connector. The configuration of the locking mechanism allows the clamping structure to lock to the connector, thus, the locking mechanism can fix the clamping structure on the lower end of the first extension.

In a preferred embodiment of the camera stand system according to the invention. It further comprises a floor extension, the connector connects the first extension and the floor extension, the floor extension is continuously stretchable to fit the height of the object. The floor extension is configured to be continuously stretchable, then the floor extension can adapt to the height of the object the camera stand system is clamping on.

In a preferred embodiment of the camera stand system according to the invention. It further comprises a floor extension, the connector connects the first extension and the floor extension, the floor extension is continuously stretchable to fit the height of the object. And, the cable of the baby camera can be configured inside of the floor extension, and the floor extension is continuously stretchable, to provide complete protection for the cable down to the floor. This also helps to keep cable away from the reaching of the baby.

In a preferred embodiment of the camera stand system according to the invention. The clamping force generator includes a screw thread, the screw thread attached the first clamping part and second clamping part together, when the screw thread is removed from the second clamping part, the second clamping part is detached from the first clamping part to expose an internal surface of the second clamping part to external for wall mounting. The screw thread is removable, thus, the aesthetic appearance of the wall mounting configuration will be better after remove of the screw thread.

In a preferred embodiment of the camera stand system according to the invention. The second clamping part having at least two screw holes.

In a preferred embodiment of the camera stand system according to the invention. The locking mechanism having a rotational symmetry order of 2, or the locking mechanism has two locking positions, the two locking positions form an angle of 180 degrees. This allows the first extension to rotate 180 degree, after the camera stand system is converted into a wall-mounting configuration. And, the camera will not face towards the wall after wall mounting.

In a preferred embodiment of the camera stand system according to the invention. The clamping structure having a through hole, the locking mechanism is configured in the through hole, and the locking mechanism is further configured with a position limiter to prevent the connector from falling through the lower opening. The configuration allows easy detaching of floor extension, and the connector will not fall on the floor to create more work to the user.

In a preferred embodiment of the camera stand system according to the invention. The screw thread is detachable connected with the second clamping part, the screw thread includes a protrusion mechanism, the second clamping part includes a hole, the protrusion mechanism is configured to thrusts into the hole and to assemble the screw thread and the second clamping part together.

In a preferred embodiment of the camera stand system according to the invention. The clamping force generator further includes a knob, the knob is coupled with the first clamping part, and the knob is configured to be matched with the screw thread to adjust the receiving space through the rotation of the knob. The knob in combination with the screw allows the adjustment of both receiving space and clamping force.

In a preferred embodiment of the camera stand system according to the invention. The screw thread matches the rotatable knob, the knob has an internal screw thread that can engage with the screw thread.

The invention also provided a camera stand system for a baby camera, comprises: a mechanically attaching structure, a supporting unit, the supporting unit is coupled to the mechanically attaching structure, the mechanically attaching structure has a convex external side surface and a flat or concave internal surface, the mechanically attaching structure includes a detachable member that defines a receiving space with the flat or concave internal surface, and the detachable member at least forms a part of the convex external side surface, the supporting unit is coupled to a part of the mechanically attaching structure other than the detachable member. When the detachable member is detached from the mechanically attaching structure, the flat or concave internal surface is exposed to external for wall mounting. The mechanically attaching structure can be configured as previously mentioned clamping structures or similar. The camera stand system can further include any one of combination of previously mentioned features.

The above-described and other aspects of the invention will be apparent from and elucidated with reference to the following detailed description of embodiments of a camera stand system with the invention.

### BRIEF DESCRIPTION OF THE DRAWINGS

The invention will be explained in greater detail with reference to the figures, in which equal or similar features are indicated by the same reference signs, and in which:
Fig. 1 shows an embodiment of a camera stand system according to the invention, and the camera stand system is attached to a crib for illustration;
Fig. 2 shows an exploded view of the clamping structure 3 of Fig. 1, wherein the main parts of the clamping structure 3 are shown mutually separated;
Fig. 3A shows the clamping structure 3 of Fig. 1;
Fig. 3B shows the clamping structure 3 of Fig. 1 with the second clamping part 5 removed from the clamping structure 3;
Fig. 4 shows the second clamping part 5 in the wall mounting configuration.

### DETAILED DESCRIPTION OF THE EMBODIMENTS

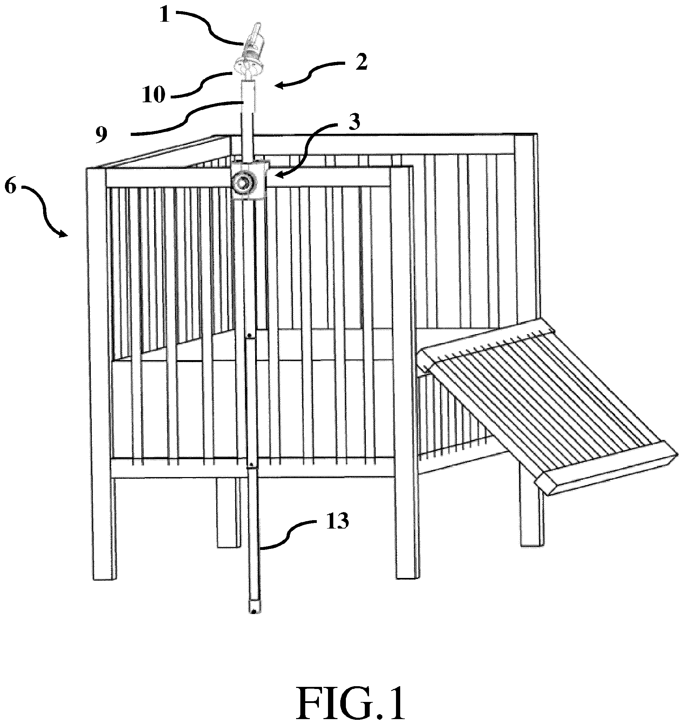

Fig. 1 shows an embodiment of a camera stand system for a baby camera 1 according to the invention. The camera stand system includes a supporting unit 2 for supporting the baby camera 1 and a clamping structure 3 for clamping on an object 6, such as a baby crib illustrated. The supporting unit 2 includes a first extension 9 and a mounting structure 10. The mounting structure 10 is on the top end of the first extension 9, and the lower end of the first extension 9 is substantially supported by the clamping structure 3.

A continuously stretchable floor extension 13 is connected to the bottom end of the clamping structure 3. As the floor extension 13 is continuously stretchable, it basically did not support the weight of the clamping structure 3 and the baby camera 1. The floor extension 13 can include a few tubes with different diameters. The tubes can relatively move from each other. So that the overall length of the floor extension 13 is stretchable to fit the height of the crib. To prevent the baby from climbing over the crib, the height of the top end of the crib to its bed surface has a reasonable range. And, the length of the first extension 9 and the mounting structure 10 is fixed height. The combination of a flexible length of the floor extension 13 and a fixed height allows the view angle of the baby camera 1 to fall into an ideal range to ensure a good view over the crib despite the variety of cribs.

The baby camera 1 can be powered by a battery or a cable. When the baby camera 1 is equipped with cable. The mounting structure 10 can configured with an opening that allows the cable to extend to the inside of the mounting structure 10. The first extension 9 is configured in a tube shape. An additional continuously stretchable floor extension 13 is also configured in a tube shape, so that, the cable from the internal of the mounting structure 10 can be extended through the first extension 9 and floor extension 13 and reach the floor. The bottom of floor extension 13 can be equipped with an exit for the cable so that the movement of the camera stand will not result in abrasion of the insulation layer of the cable. Then, the cable can be connected to a socket or an adaptor. The invention also covers the embodiment of first extension 9 and/or floor extension 13 in other shapes or structures to achieve a similar result. The cable can also enter the internal of the first extension 9 through an opening on the first extension 9. This configuration protects the cable from the baby inside the crib.

The clamping structure 3 has a knob 16 to adjust the clamping force applied to the crib to ensure the camera stand system is secured relative to the crib. And, for an easy adjustment of the knob 16 from the caregiver, the knob 16 is configured towards the external of the crib.

Fig .2 illustrates a detailed exploded view of the clamping structure 3. The clamping structure 3 includes a first clamping part 4 and a second clamping part 5. The first clamping part 4 is in a reversed U shape and equipped with a rotatable knob 16. The second clamping part 5 is configured with a screw thread 12 which matches the rotatable knob 16. The knob 16 has an internal screw thread which can engage with the screw thread 12. The second clamping part 5 with the screw thread 12 can be installed in the first clamping part 4 through the bottom of the reversed U shape first clamping part 4. Thus, the dimension of the bottom part of the first clamping part 4 is configured to be larger than the second clamping part 5 and the screw thread 12 to allow installation of the second clamping part 5.

Once the second clamping part 5 is installed in the first clamping part 4 to form a clamping structure 3. The second clamping part 5 is movable relative to the first clamping part 4 to adjust the receiving space 6a to fit the object 6. The knob 16 and the screw thread 12 are configured to drive the second clamping part 5 to move relative to the first clamping part 4 to adjust the receiving space 6a.

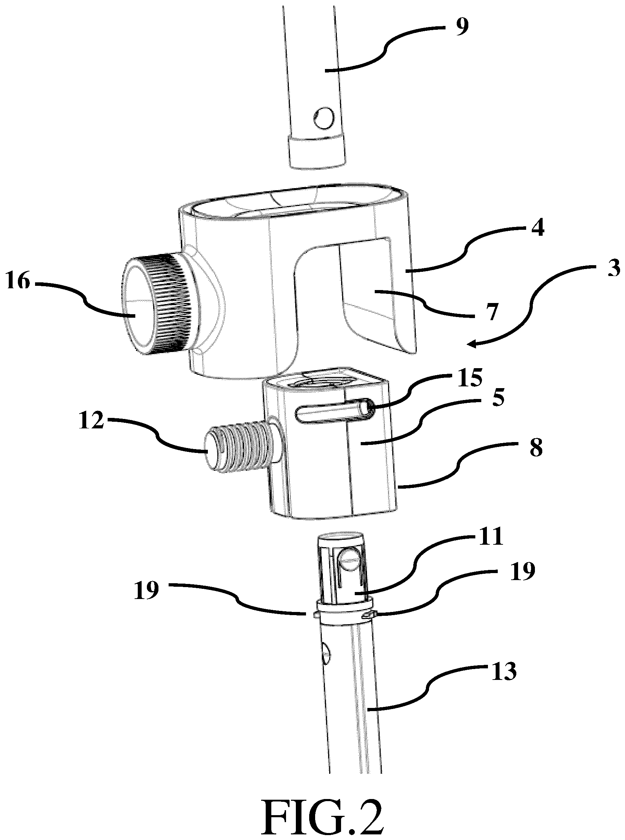

As illustrated in Fig. 2, the second clamping part 5 has a through hole in the vertical direction where the first extension 9 and the floor extension 13 join. The first clamping part 4 is configured with an opening for the first extension 9 in a position that corresponds to the position of the through hole in the second clamping part 5. And, the opening is configured bigger than the through hole, so that, when the first extension 9 and the floor extension 13 join in the through hole of the second clamping part 5, the second clamping part 5 is movable relative to the first clamping part 4 without physical interference.

The first extension 9 and the floor extension 13 are joined with a connector 11. The bottom end of the first extension 9 and the upper end of the floor extension 13 both have at least a hole that fits at least one clip-in mechanism on both ends of the connector 11. Thus, the first extension 9, and the floor extension 13 can be joined through the connector 11.

The connector 11 is further configured with two protrusions 19 which can lock with the locking mechanism inside the through hole of the second clamping part 5. So that, the second clamping part 5 can be fixed on the joints of the first extension 9 and the floor extension 13 along the direction of extension for the first extension 9 and/or the floor extension 13.

The locking mechanism has a rotational symmetry order of 2, or it has two locking positions that form an angle of 180 degrees. This allows the mounting structure 10 to rotate for half a circle when the camera stand system is configured for wall mounting configuration.

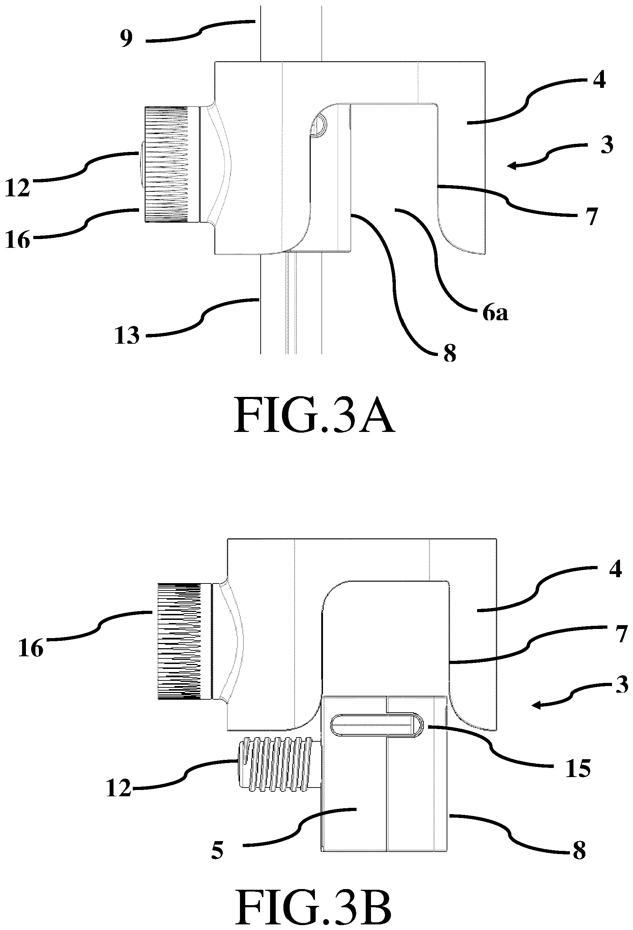

Fig. 3A illustrates the clamping structure 3 in the embodiment. When the second clamping part 5 and the first clamping part 4 are assembled. The first clamping surface 7 and the second clamping surface 8 are configured opposite to each other, to define a receiving space 6a to receive at least a part of object 6, which the clamping structure 3 can clamp on. The screw thread 12 and the knob 16 may cooperate to adjust the receiving space 6a.

Fig. 3B also illustrates the clamping structure 3. After the locking mechanism inside the through hole of the second clamping part 5 is unlocked with the protrusion 19 of connector 11, the second clamping part 5 is removed from the first clamping part 4.

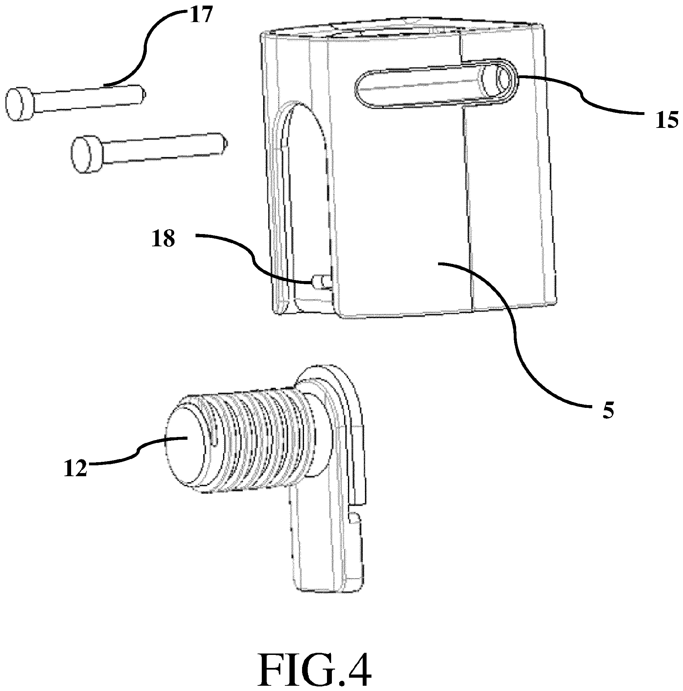

See Fig. 4, after the second clamping part 5 part is removed, the screw thread 12 can be pressed in the horizontal direction, to drive a protrusion mechanism on the screw thread 12 out of a corresponding hole 18 inside of the second clamping part 5. Then, the screw thread 12 can be removed from the second clamping part 5. The floor extension 13 can be detached with the connector 11, and the first extension 13 is still connected with the connector 11. The connector 11 then can be locked with the locking mechanism inside of the second clamping part 5, which is half a circle away from its previous locking position in the crib clamping configuration.

For wall mounting configuration, screws 17 can screw in the screw hole to secure the second clamping part 5 in a wall mounting configuration.

But, when the second clamping part is in a crib clamping configuration, the screw thread 12 can be attached to the second clamp part 5. There is a protrusion mechanism on the screw thread 12 which thrusts into the hole 18 in the second clamping part 5 and assembly the screw thread 12 and the second clamping part 5 together.

Variations to the disclosed embodiments can be understood and effected by those skilled in the art in practicing the principles and techniques described herein, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A camera stand system for a baby camera (1), comprises:
a supporting unit (2) for supporting the baby camera (1);
a clamping structure (3), the clamping structure (3) is adapted to clamping on an object (6);
the clamping structure (3) includes a first clamping part (4), a second clamping part (5), **characterized in**,
the clamping structure (3) further includes a clamping force generator,
the first clamping part (4) and the second clamping part (5) define a receiving space (6a) configured to receive at least a part of the object (6);
the clamping force generator is in connection with the first clamping part (4) and the second clamping part (5) and generates a clamping force for clamping on the object (6);
the supporting unit (2) is configured to secure on the second clamping part (5);
the second clamping part (5) is removable from the clamping structure (3) and configured to be mountable to a wall.

2. The camera stand system according to claim 1, wherein,
the clamping force generator is in connection with the first clamping part (4) and the second clamping part (5) and generates a clamping force to adjust the receiving space (6a) to fit to the object (6) and clamping on the object (6).

3. The camera stand system according to claim 1, wherein,
the first clamping part (4) and the second clamping part (5) are relatively movable along a first direction.

4. The camera stand system according to claim 3, wherein,
the clamping force generator is configured to generate the clamping force substantially in parallel with the first direction.

5. The camera stand system according to any one of claim 1~4, wherein,
the first clamping part (4) having a first clamping surface (7), and the second clamping part (5) having a second clamping surface (8), the first clamping surface (7) and the second clamping surface (8) define the receiving space (6a) configured to receive at least a part of the object (6),
when the second clamping part (5) is removed from the clamping structure (3), the second clamping surface (8) is exposed to external and configured to be mountable to the wall.

6. The camera stand system according to any one of claim 1~4, wherein,
the supporting unit (2) includes a first extension (9) and a mounting structure (10) for mounting the baby camera (1),
the first extension (9) having a lower end and an upper end;
the mounting structure (10) is secured on the second clamping part (5) through the first extension (9).

7. The camera stand system according to claim 6, further comprises,
a connector (11) attached on the lower end of the first extension (9),
a locking mechanism configured in the clamping structure (3) to lock the connector (11) so that the clamp structure (3) can be coupled to the first extension (9) through the connector (11).

8. The camera stand system according to claim 6, further comprises,
a floor extension (13),
the connector (11) connects the first extension (9) and the floor extension (13),
the floor extension (12) is continuously stretchable to fit the height of the object (6).

9. The camera stand system according to any one of claim 1~4, wherein,
the clamping force generator includes a screw thread (12), the screw thread (12) attached the first clamping part (4) and second clamping part (5) together,
when the first clamping part (4) is removed from the second clamping part (5), the second clamping part (5) is detached from the first clamping part (4) to expose an internal surface of the second clamping part (5) to external for wall mounting.

10. The camera stand system according to claim 1~5, wherein,
the second clamping part (5) having at least two screw holes (15).

11. The camera stand system according to claim 7, wherein,
the locking mechanism having a rotational symmetry order of 2, or the locking mechanism has two locking positions, the two locking positions form an angle of 180 degree.

12. The camera stand system according to claim 7, wherein,
the clamping structure (3) having a through hole, the locking mechanism is configured in the through hole, and the locking mechanism is further configured with a position limiter to prevent the connector (11) from falling through the lower opening.

13. The camera stand system according to claim 9, wherein,
the screw thread (12) is detachable connected with the second clamping part (5), the screw thread (12) includes a protrusion mechanism, the second clamping part (5) includes a hole (18) , the protrusion mechanism is configured to thrusts into the hole (18) and to assemble the screw thread (12) and the second clamping part (5) together.

14. The camera stand system according to claim 9, wherein,
the clamping force generator further includes a knob (16), the knob (16) is coupled with the first clamping part (4), and the knob (16) is configured to be matched with the screw thread (12) to adjust the receiving space (6a) through the rotation of the knob.

15. The camera stand system according to claim 14, wherein,
the screw thread (12) matches the rotatable knob (16), the knob (16) has an internal screw thread that can engage with the screw thread (12)
